# EUROPÄISCHE PATENTANMELDUNG

(11) **EP 2 199 908 A1**
(43) Veröffentlichungstag der Anmeldung: **23.06.2010**
(21) Anmeldenummer: 08172615.0
(22) Anmeldetag: 22.12.2008
(51) Int. Cl.: G06F 9/46

(54) **Zugriffsverfahren auf ein Übertragungsmedium**

(71) Anmelder: ControlExpert GmbH, 40764 Langenfeld (DE)
(72) Erfinder: Kallweit, Wolfgang Martin, 40822 Mettmann (DE); Witte, Gerhard Karl Willi, 40764 Langenfeld (DE)
(74) Vertreter: Schwabe - Sandmair - Marx

(57) **Zusammenfassung**

Die Erfindung betrifft ein Verfahren zum Vorbereiten oder Durchführen eines Zugriffs, insbesondere einer Datenübertragung, von einer auf einer Client-Datenverarbeitungseinrichtung ausführbaren oder ausgeführten ersten Applikation (10) auf ein mit der Client-Datenverarbeitungseinrichtung gekoppeltes Übertragungsmedium (40). Es werden die Schritte ausgeführt: Bereitstellen einer zweiten Applikation (20), welche mindestens eine Schnittstelle aufweist, zum Wandeln des Formats von Informationen, welche von der ersten Applikation (10) übermittelt werden, auf ein durch die zweite Applikation (20) vorgegebenes Standard-Format; und Anmelden oder Installieren dieser zweiten Applikation (20) bei oder auf der Client-Datenverarbeitungseinrichtung zum übertragen oder Ermöglichen der Übertragung der Informationen der ersten Applikation (10) im Standard-Format zwischen der zweiten Applikation (20) und dem Übertragungsmedium (40).

## Beschreibung

Die Erfindung betrifft ein Verfahren, ein Computerprogramm, eine Datenspeichereinheit und ein System zum Vorbereiten oder Durchführen eines Zugriffs, insbesondere einer Datenübertragung, von einer Applikation auf ein Übertragungsmedium.

Beim Ausführen von Computerapplikationen, beispielsweise von Programmen für Daten- oder Textverarbeitung, graphischen Programmen oder branchenspezifischen Vorgangssteuerungsprogrammen, können Ergebnisse in Form von Daten ermittelt oder erzeugt werden, welche beispielsweise als Dateien oder Datenströme vorliegen. Diese Daten weisen im Allgemeinen ein für die betreffende Computerapplikation spezifisches Format auf. Ein Austausch von Daten oder eine Kommunikation zwischen unterschiedlichen Computerapplikationen kann, aufgrund der Unterschiedlichkeit der damit verbundenen Daten-Formate, ein komplizierter und arbeitsaufwändiger Vorgang sein. Ebenso kompliziert kann sich der Datenaustausch oder das einfache Versenden von Daten von einer Computerapplikation mit einem Übertragungsmedium, wie beispielsweise dem Internet, oder an eine mit dem Übertragungsmedium verbundene Serverapplikation gestalten.

Aufgabe der Erfindung ist es, ein Verfahren bereitzustellen, mit dessen Hilfe ein Zugriff, insbesondere eine Datenübertragung, einer auf einer Datenverarbeitungseinrichtung ausgeführten Computerapplikation auf ein mit der Datenverarbeitungseinrichtung gekoppeltes Übertragungsmedium vereinfacht werden kann.

Vorstehende Aufgabe wird durch die Gegenstände der unabhängigen Ansprüche gelöst. Die abhängigen Ansprüche sind auf vorteilhafte Weiterbildungen gerichtet.

Ein Aspekt der Erfindung betrifft ein Verfahren zum Vorbereiten oder Durchführen eines Zugriffs insbesondere einer Datenübertragung von einer auf einer Client-Datenverarbeitungseinrichtung ausführbaren oder ausgeführten ersten Applikation auf ein mit der Client-Datenverarbeitungseinrichtung gekoppeltes Übertragungsmedium. Das Übertragungsmedium kann ein Computer- oder Kommunikationsnetz, beispielsweise ein LAN, ein WAN oder vorzugsweise das Internet, sein. Vorbereiten des Zugriffs kann bedeuten, dass im Vorfeld des Zugriffs Maßnahmen getroffen werden, welche die gestellte Aufgabe lösen. Durchführen des Zugriffs kann bedeuten, dass die Datenübertragung zwischen der ersten Applikation und dem Übertragungsmedium durch das Verfahren ausgeführt wird.

Das Verfahren umfasst die Schritte Bereitstellen einer zweiten Applikation und Anmelden oder Installieren der zweiten Applikation bei oder auf der Client-Datenverarbeitungseinrichtung. Die zweite Applikation weist mindestens eine Schnittstelle auf zum Normieren von Datenformaten, das heißt zum Wandeln des Formats von Informationen, welche von der ersten Applikation übermittelt werden, auf ein durch die zweite Applikation vorgegebenes Standard-Format. Die von der ersten Applikation übermittelten Informationen können beispielsweise ein DOC, RTF, TXT, GIF, JPEG, HTML oder ein anderes Format aufweisen. Das durch die zweite Applikation vorgegebene Standard-Format kann XML, PDF/A oder ein anderes Standard-Format sein.

Das Anmelden oder Installieren der zweiten Applikation bei oder auf der Client-Datenverarbeitungseinrichtung kann dazu dienen, der Client-Datenverarbeitungseinrichtung mitzuteilen, dass die zweite Applikation zum Ausführen bereit steht, als auch dazu, Konfigurationsparameter oder Einstellungen der zweiten Applikation an die Client-Datenverarbeitungseinrichtung zu übertragen. Die Konfigurationsparameter der zweiten Applikation können beispielsweise das Format der von der ersten Applikation versendeten Informationen, und/oder das gewünschte Standard-Format betreffen und können in eine Registry und/oder in eine Konfigurationsdatei der ersten oder zweiten Applikation und/oder eines Betriebssystems eingetragen werden. Die durchgeführten Einstellungen können persistent sein, das heißt, sie können auch nach wiederholtem Starten / Beenden der zweiten Applikation, sowie nach Aus- / Einschalten der Client-Datenverarbeitungseinrichtung, erhalten bleiben.

Beim Ausführen der zweiten Applikation auf der Client-Datenverarbeitungseinrichtung kann durch das Anmelden oder Installieren der zweiten Applikation eine Übertragung der Informationen der ersten Applikation im Standard-Format zwischen der zweiten Applikation und dem Übertragungsmedium ermöglicht oder durchgeführt werden. Das Ermöglichen der Übertragung kann auch einen Vorgang betreffen, welcher vor der Installation gestartet wurde, wobei die zu übertragenden Informationen und/oder ein damit verbundener Übertragungsprozess sich in einer Warteschlange (batch-job) befinden. Bei einer derart retardierten Ausführung kann der Übertragungsprozess die zweite Applikation ausführen und auf die bei der Installation erstellten Konfigurationsparameter zugreifen.

Gemäß einer Ausführungsform können die Informationen, welche von der ersten Applikation übermittelt werden, zunächst in ein Zwischenformat und anschließend in das Standard-Format gewandelt werden. Das Zwischenformat kann beispielsweise das plattformübergreifende Portable Document Format (PDF) sein. Dieses zweistufige Wandeln kann effizient und einfach realisiert werden, weil für ein Wandeln von einem beliebigen Datenformat in das weit verbreitete PDF eine Vielzahl von leistungsfähigen Formatwandlern bekannt sind, beispielsweise der PDFCreator, und weil PDF ein altes, gut bekanntes und ausgereiftes Format ist und daher PDF-Dokumente zum Wandeln in das Standard-Format, beispielsweise in ein XML-Format, leicht zu parsen sind.

Gemäß einer weiteren Ausführungsform kann die zweite Applikation eine Auswahl- oder Eingabemaske zum Eingeben von Informationen bereitstellen. Die Eingabemaske kann eine graphische Benutzeroberfläche, vorzugsweise eine Windows-Applikation, oder eine plattformunabhängige, beispielsweise eine in einem Webbrowser integrierte Applikation, sein. Die Informationen können Text, Steuerbefehle, und/oder gespeicherte Dateien umfassen, wobei die Dateien mittels eines Menus der Eingabemaske uploadet und an die zu übertragenden Daten beigefügt werden. Nach Eintragen der Informationen in die Eingabemaske können die Informationen in das Standard-Format gewandelt und an das Übertragungsmedium übertragen werden.

Gemäß einer Ausführungsform kann die zweite Applikation eine Mehrzahl von Client-Schnittstellen für eine Mehrzahl von ersten Applikationen und mindestens eine Standard-Schnittstelle für mindestens ein Standard-Format umfassen. Falls ein Zwischenformatwandler vorliegt ist die Auswahl der Client-Schnittstellen durch den Zwischenformatwandler, beispielsweise dem PDFCreator, bestimmt. Falls kein Zwischenformatwandler vorliegt können die Client-Schnittstellen alle bekannten oder gängigen Dateiformate umfassen. Über die von der Mehrzahl von Client-Schnittstellen ausgewählte, der ersten Applikation zugeordnete Client-Schnittstelle, werden die Informationen in dem zu wandelnden Format zwischen der ersten Applikation und der zweiten Applikation übertragen, und zwischen der zweiten Applikation und dem Übertragungsmedium über die mindestens eine dem Standard-Format zugeordnete Standard-Schnittstelle. Ist eine Festlegung der Client-Schnittstelle und/oder Standard-Schnittstelle einmal getroffen, so kann die Festlegung während einer Ausführungszeit der zweiten Applikation, und/oder während einer Ausführungszeit des Betriebssystems, und/oder bis zu einer erneuten Festlegung persistent sein.

Gemäß einer weiteren Ausführungsform kann eine mit der Standard-Schnittstelle der zweiten Applikation und mit dem Übertragungsmedium gekoppelte Kommunikationseinrichtung, umfassend beispielsweise einen Datensender und/oder einen Datenempfänger, die Informationen im Standard-Format zwischen der zweiten Applikation und dem Übertragungsmedium übertragen. Die Kommunikationseinrichtung kann ein WebService Client sein, welcher über ein Computernetz, insbesondere das Internet, mit einem WebService Server und/oder einem anderen WebService Client kommunizieren kann. Die Kommunikation kann verschlüsselt oder unverschlüsselt sein, wobei eine Verschlüsselung die gängigen Verschlüsselungs- oder Kryptoverfahren umfasst, beispielsweise 128 Bit SSL.

Gemäß einer Ausführungsform kann die zweite Applikation ein Treiber, insbesondere ein Druckertreiber, zur Umsetzung einer uni- oder bidirektionalen Kommunikation zwischen der ersten Applikation und dem Übertragungsmedium und/oder der Kommunikationseinrichtung sein. Eine Umsetzung der zweiten Applikation als Treiber hat den ausgesprochenen Vorteil einer hohen Bedienfreundlichkeit und Flexibilität, weil so gut wie alle Applikationen eine Druckerausgabe und ein damit verbundenes Auswahlmenu für einen geeigneten Druckertreiber aufweisen. Die zweite Applikation kann somit in einer Auswahlliste der ersten Applikation mit verfügbaren Druckertreibern eingefügt werden, wodurch eine einfache und intuitive Auswahl oder Festlegung einer Datenübertragung über die zweite Applikation möglich ist. Mittels eines Druckbefehls an den Druckertreiber wird die zweite Applikation ausgeführt, wobei unmittelbar nach dem Start der zweiten Applikation die Eingabemaske zur Eingabe von Informationen bereitgestellt wird. Durch eine Integration der zweiten Applikation als Druckertreiber in eine erste Applikation wird mittelbar oder unmittelbar die Client-Schnittstelle der zweiten Applikation festgelegt.

Gemäß einer weiteren Ausführungsform kann eine Server-Applikation die Informationen im Standard-Format empfangen, welche von einer sendenden ersten Applikation mittels der zweiten Applikation in das Standard-Format umgesetzt und von der Kommunikationseinrichtung übertragen wurden. Die Server-Applikation, welche auf einer mit dem Übertragungsmedium gekoppelten Server-Datenverarbeitungseinrichtung ausgeführt wird, ist zum Empfangen, Senden und/oder Verwalten von Informationen im Standard-Format ausgebildet. Das Verwalten von Informationen kann eine Pflege einer Datenbank, ein Einfügen der Informationen in die Datenbank, und/oder eine Erstellung von Statistiken zu den Informationen umfassen.

Gemäß einer Ausführungsform kann die von der Kommunikationseinrichtung der Client-Datenverarbeitungseinrichtung an die Server-Applikation übertragenen Informationen im Standard-Format durch einen Parser der Server-Applikation zur automatisierten Weiterverarbeitung durch die Server-Applikation in ein für die Weiterverarbeitung geeignetes Format übertragen werden. Das Parsen ermöglicht den Zugang auf die einzelnen Informationen oder auf Gruppen von Informationen, beispielsweise Adressen, Text-Kommentare und/oder Bilder. Die automatisierte Weiterverarbeitung kann eine Plausibilitätsprüfung, eine Archivierung und/oder eine visuelle Anzeige der Informationen auf einem mit der Server-Datenverarbeitungseinrichtung gekoppelten Display umfassen. Die Plausibilitätsprüfung betrifft eine Erkennung fehlerhafter oder fehlender Daten in den übertragenen Informationen. Ein negatives Ergebnis der Plausibilitätsprüfung kann in einer Rückmeldung integriert und an die Client-Datenverarbeitungseinrichtung versendet oder ein Alarm auf der Server-Datenverarbeitungseinrichtung ausgelöst werden.

Gemäß einer Ausführungsform kann die auf der Client-Datenverarbeitungseinrichtung installierte zweite Applikation eine automatische Update-Funktion aufweisen. Die Update-Funktion kann vorzugsweise bei jeder Ausführung der zweiten Applikation prüfen, ob eine Version der auf der Client-Datenverarbeitungseinrichtung installierten zweiten Applikation eine aktuelle Version der zweiten Applikation ist. Bei einem positiven Prüfergebnis wird kein Update der zweiten Applikation durchgeführt. Bei einem negativen Prüfergebnis wird die auf der Client- Datenverarbeitungseinrichtung installierte zweite Applikation aktualisiert, das heißt es wird ein Update durchgeführt. Die Prüfung kann auch in regelmäßigen oder unregelmäßigen Zeitabständen ausgeführt werden, wobei die Zeitpunkte der Prüfung gegebenenfalls einzeln festlegbar sind.

Gemäß einer weiteren Ausführungsform kann die Server-Applikation nach dem Empfangen der von der Kommunikationseinrichtung, welche auf der Client-Datenverarbeitungseinrichtung in Betrieb ist, übertragenen Informationen im Standard-Format, eine Empfangsbestätigung an die Kommunikationseinrichtung senden. Die Empfangsbestätigung kann ein Ergebnis der Plausibilitätsprüfung der übertragenen Informationen, einschließlich einer Anforderung von Informationen, die in dem Datenstrom vom Client an den Server fehlen oder fehlerhaft sind, und/oder eine Aufstellung / ein Plan für künftige Aktionen umfassen.

Ein weiterer Aspekt der Erfindung betrifft ein Computerprogramm, welches dazu ausgelegt ist, wenn es auf einer Datenverarbeitungseinrichtung geladen oder ausgeführt wird, das Verfahren nach einem der vorhergehenden Ansprüche auszuführen. Das Laden des Computerprogramms kann bedeuten, dass eine ausführbare Version des Computerprogramms auf einem Speichermedium der Datenverarbeitungseinrichtung zum Ausführen bereit steht oder bereits mittels Laden des Computerprogramms ausgeführt wird.

Ein weiterer Aspekt der Erfindung betrifft eine Datenspeichereinheit oder Computerprogrammprodukt umfassend das Computerprogramm.

Ein weiterer Aspekt der Erfindung betrifft ein System zum Vorbereiten oder Durchführen eines Zugriffs, insbesondere einer Datenübertragung von einer auf einer Client-Datenverarbeitungseinrichtung ausführbaren oder ausgeführten ersten Applikation auf ein mit der Client-Datenverarbeitungseinrichtung gekoppeltes Übertragungsmedium, beispielsweise ein Computer-Netz, vorzugsweise das Internet. Eine zweite Applikation ist bereitgestellt, welche mindestens eine Schnittstelle aufweist zum Wandeln des Formats von Informationen, welche von der ersten Applikation übermittelt werden, auf ein durch die zweite Applikation vorgegebenes Standard-Format. Diese zweite Applikation kann bei oder auf der Client-Datenverarbeitungseinrichtung zum Übertragen oder Ermöglichen der Übertragung der Informationen der ersten Applikation im Standard-Format zwischen der zweiten Applikation und dem Übertragungsmedium angemeldet oder installiert werden.

Ein Computerprogramm, welches dazu ausgelegt ist, das System zum Vorbereiten oder Durchführen eines Zugriffs auf das Übertragungsmedium zu implementieren, kann auf einem portablen Speichermedium, beispielsweise einem USB-Stick, gespeichert sein. Mittels Anschließen des USB-Sticks an einen PC ist das Programm ausführbar, wodurch das System den auf dem PC installierten Applikationen zur Verfügung steht.

Die vorliegende Erfindung wird anhand von Ausführungsbeispielen näher erläutert werden. Dabei zeigt
- Fig. 1: eine schematische Darstellung der Funktionselemente zum Ausführen des erfindungsgemäßen Verfahrens in einem ersten Ausführungsbeispiel,
- Fig. 2: eine schematische Darstellung der Funktionselemente zum Ausführen des erfindungsgemäßen Verfahrens in einem zweiten Ausführungsbeispiel,
- Fig. 3: einen Ablaufplan der Verfahrensschritte gemäß zweitem Ausführungsbeispiel,
- Fig. 4: einen Ablaufplan der Verfahrensschritte einer Installation des Postmasters gemäß einem dritten Ausführungsbeispiel, und
- Fig. 5: ein Ablauf- und Betriebsdiagramm des Postmasters gemäß drittem Ausführungsbeispiel.

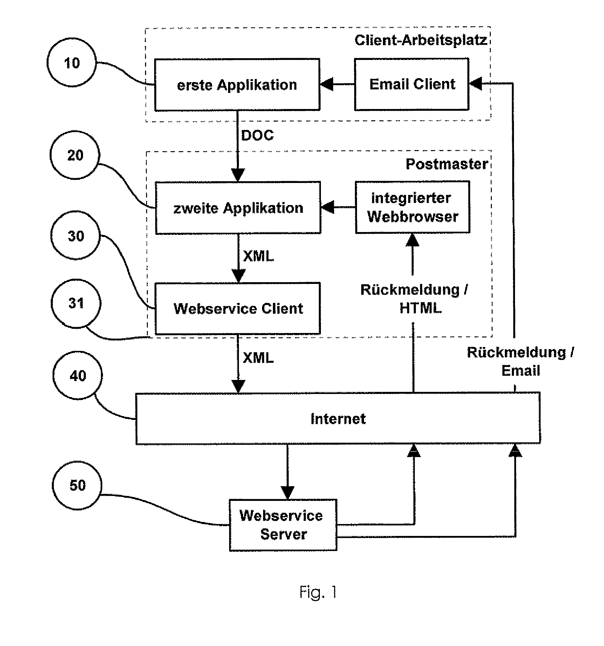

Die Figur 1 zeigt eine schematische Darstellung der Funktionselemente zum Ausführen des erfindungsgemäßen Verfahrens. In diesem ersten Ausführungsbeispiel geht es um das Vorbereiten und Durchführen einer Datenübertragung von einer auf einer Client-Datenverarbeitungseinrichtung ausführbaren oder ausgeführten ersten Applikation 10, vorzugsweise einer Text- oder Graphikapplikation, auf das mit der Client-Datenverarbeitungseinrichtung gekoppelte Internet 40.

Eine für eine Datenübertragung mit der ersten Applikation 10 gekoppelte zweite Applikation 20 weist mindestens eine Schnittstelle auf zum Wandeln des Formats von Informationen, welche von der ersten Applikation 10 übermittelt werden, auf ein durch die zweite Applikation 20 vorgegebenes Standard-Format. Das Standard-Format ist vorliegend ein XML-Format. Die zweite Applikation 20 ist auf der Eingabeseite mit der ersten Applikation 10 und auf der Ausgabeseite mit einem Webservice Client 30 gekoppelt. Der Webservice Client 30 ist zum Aussenden und Empfangen von Informationen im XML-Format ausgelegt. Ein Postmaster 31 stellt eine funktionelle Einheit dar, welche die zweite Applikation 20 und den Webservice Client 30 umfasst.

Ein Webservice Server 50 ist zum Empfangen und Senden von Informationen im HTML- oder XML-Format, sowie zum Senden und/oder Empfangen von Emails, mit dem Internet 30 gekoppelt. Das Internet 30 stellt ein Übertragungsmedium zum Übermitteln von Informationen zwischen dem Webservice Client 30 und dem Webservice Server 50. Das Übertragungsmedium kann auch eine Speichervorrichtung, wie zum Beispiel ein USB-Stick, eine CD-ROM oder eine Festplatte sein. Der Webservice Server 50 ist dazu ausgelegt, Nachrichten im XML-Format von dem Webservice-Client zu empfangen und anschließend eine Rückmeldung an die erste Applikation per Email zu versenden.

Der Webserver empfängt vom Client ein Dokument im XML-Format, sendet allerdings ein Dokument im HTML-Format zurück, welches als Ergebnis in einem im Postmaster 31 integrierten Webbrowser angezeigt wird, client- und vorgangsspezifisch. Der integrierte Webbrowser zeigt als Ergebnis eine Website an einschließlich weiterer Links zu Prüfberichten, Dokumenten usw., die zum jeweiligen Client und zum abgeschickten Vorgang gehören. Das Gleiche geschieht auch bei einem Update des Postmasters 31: Ein integriertes Webbrowser- Fenster wird geöffnet und das kundenspezifische Update der Postmaster- Anwendung wird bereitgestellt. Zusätzlich kann der Webserver auch Antworten oder eine Zusammenfassung des Eingangs per Email zurücksenden - dieser Weg ist optional und von der direkten Antwort an den Postmaster via Rückantwort durch den Webservice auf dem Webserver abgekoppelt.

Die zweite Applikation 20 ist bei oder auf der Client-Datenverarbeitungseinrichtung zum Übertragen oder Ermöglichen der Übertragung der Informationen der ersten Applikation 10 im Standard-Format zwischen der zweiten Applikation 20 und dem Übertragungsmedium 40 angemeldet oder installiert. Die zweite Applikation 20 ist daher bereit zum Ausführen einer Wandlung von Informationen, die von der ersten Applikation 10 bereitgestellt sind.

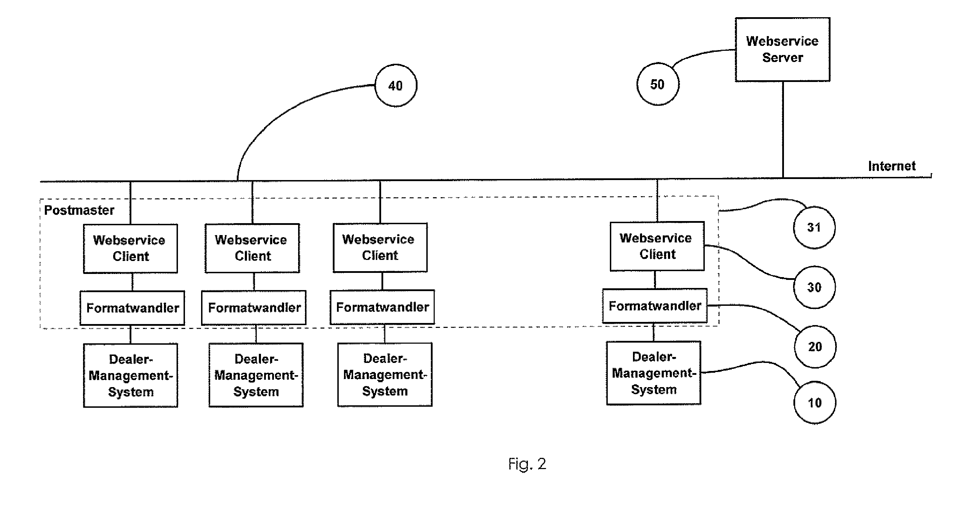

Die Figur 2 zeigt eine schematische Darstellung der Funktionselemente zum Ausführen des erfindungsgemäßen Verfahrens in einem zweiten Ausführungsbeispiel. Die erste Applikation ist in diesem zweiten Ausführungsbeispiel ein Dealer-Management-System 10, die zweite Applikation ist ein Formatwandler 20, welcher im Wesentlichen eine zweistufige Formatwandlung von einem beliebigen Format eines Eingabedokuments nach PDF mittels PDFCreator und anschließend von PDF nach XML durchführt.

Die Problematik der Vernetzung von KFZ-Werkstätten, Versicherungsunternehmen, Sachverständigen, sonstigen Handwerkern, Autovermietern und Automobilherstellern ist die, dass zahlreiche Branchenpakete, sogenannte Dealer-Management-Systeme verfügbar sind, die alle über eigene Schnittstellen verfügen. Möchte man aus diesen Anwendungen heraus strukturierte Daten oder einfache Dokumente versenden, ist es erforderlich, dass in, der jeweiligen Software eine spezielle Schnittstelle programmiert wird, diese Daten dann an eine bestimmte Adresse übertragen zu können. Alleine in der KFZ-Branche sind mehr als 1000 unterschiedliche Dealer-Management-Systeme vorhanden mit der Folge, dass eine Vernetzung extrem schwierig wird bzw. nur Produkte aus einzelnen Softwarepaketen dann wiederum über bestimmte Kommunikationsknoten übertragen werden können.

Um hier flächendeckend eine Kommunikation möglichst schnell und einheitlich zu gewähren, wird ein Postmaster bereitgestellt, der sich im Prinzip wie ein Druckertreiber in das jeweilige Betriebssystem implementieren lässt. Dieser Druckertreiber kann dann alternativ zu vorhandenen Druckern ausgewählt werden oder auch standardmäßig vorgewählt werden. Dieser Druckertreiber lässt dann eine Auswahlmaske zu, die eine Bedienperson in die Lage versetzt, hier nach bestimmten Empfängerdaten wie beispielsweise Auswahl der jeweiligen Versicherungsgesellschaft und auch Daten des Unfallgegners wie beispielsweise Kennzeichen, Fahrzeugart und so weiter gezielt Fragen zu stellen. Wenn anschließend auf die Taste "Senden" gedrückt wird, erfolgt automatisiert im Hintergrund bei einer vorhandenen Internetverbindung eine Übertragung der jeweiligen Datei. Dabei kann es sich um beliebige Dateien wie Word-Dateien, PDF-Dateien, Bild-Dateien handeln. Quasi alle Dateien und Informationen, die auch in allen Programmen dem Drucker zur Verfügung gestellt werden, sind somit übertragbar. Diese Dateien erreichen uns dann auch in strukturierter Form, sodass wir mit geeigneten Parsern die Information auslesen und anschließend maschinell weiter bearbeiten können.

Diese Variante hat den gravierenden Vorteil, dass in allen unterschiedlichen Dealer-Management-Systemen, Bildbearbeitungssystemen und Standardprogrammen eine Möglichkeit vorhanden ist, einen Drucker auszuwählen. Im Anschluss daran kann auch automatisiert über den Postmaster-Druckertreiber der Standarddrucker vorbelegt werden oder die Dateien beispielsweise auf einem USB-Stick oder sonst wo sicher abgelegt werden. Während der Übertragung, die im Hintergrund abläuft, wird von einem Webservice-Server registriert, ob der Vorgang eingegangen ist und sofort eine Quittung zurückgeschickt mit der Folge, dass der Absender auch sicher sein kann, dass seine Dokumente beim Empfänger angekommen sind. Die Quittung ist ein HTML- Dokument, weiches in einem im Postmaster 31 integrierten Webbrowser angezeigt wird. Darin eingebettet können sich weitere Verweise (Links) zu vorgangsbezogenen Dokumenten befinden, wie z.B. Prüfberichte oder Ähnliches.

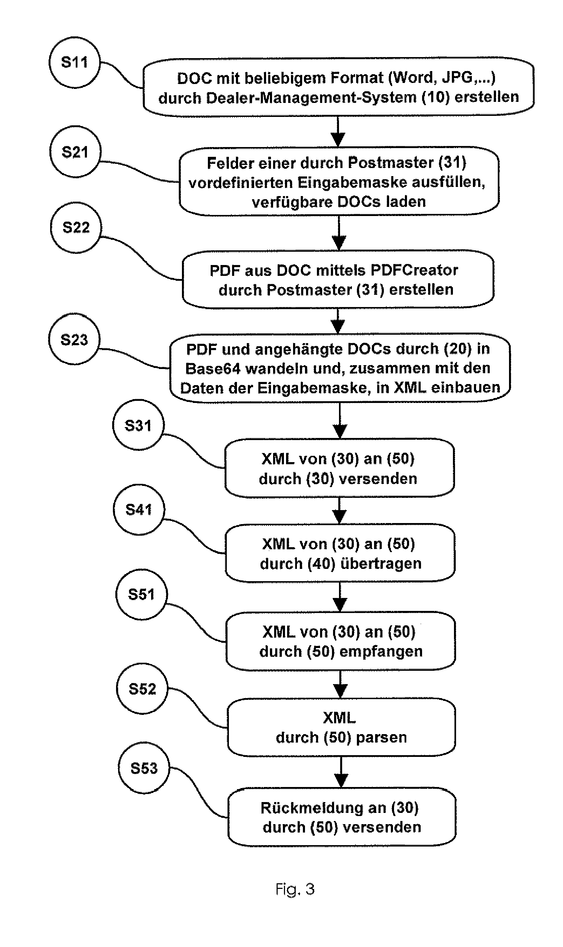

Die Figur 3 zeigt einen Ablaufplan der Verfahrensschritte gemäß zweitem Ausführungsbeispiel. Im Zusammenhang mit den in den Figuren 1 und 2 gezeigten funktionellen Elemente werden die Verfahrensschritte erläutert. Hierbei ist vorausgesetzt, dass der Formatwandler 20 bei oder auf der Client-Datenverarbeitungseinrichtung zum Übertragen oder Ermöglichen der Übertragung der Informationen des Dealer-Management-Systems 10 im Standard-Format zwischen dem Dealer-Management-System 20 und dem Internet 40 angemeldet oder installiert ist.

In dem Schritt S11 wird ein Dokument, beispielsweise ein Text- oder Graphik-Dokument durch das Dealer-Management-System 10 erstellt. Zum Versenden des Dokuments an eine mit einem Webservice-Server 50 gekoppelte Verwaltungszentrale und/oder zum Zugreifen auf das Internet 40 wird der Postmaster 31 in der Treiber-Auswahlliste des Dealer-Management-Systems 10 durch Auswahl eines entsprechenden Treibers festgelegt. Nach Übertragung dieser Festlegung an den vom Dealer-Management-System 10 aufgerufenen Postmaster 31 wird im Schritt S21 eine Eingabemaske oder Auswahlmaske des Postmasters 31 bereitgestellt, mittels welcher zu übertragender Text eingegeben und zu übertragende Dateien uploadet werden können. Die zu übertragenden Informationen werden danach im Schritt S22 mittels PDFCreator in das Zwischenformast PDF und im Schritt 23 in das Standard-Format XML gewandelt. In den anschließenden Schritten S31, S41 und S51 werden die Informationen in XML-Format von dem Webservice-Client 30 über das Internet 40 an den Webservice-Server 50 versendet. Die Informationen in XML-Format werden durch den Webservice-Client 30 empfangen, geparst S52, archiviert und gegebenenfalls statistisch und/oder durch eine Bedienperson ausgewertet. Abschließend versendet im Schritt S53 der Webservice-Server 50 eine Rückmeldung an das Dealer-Management-System 10 betreffend die empfangenen Informationen.

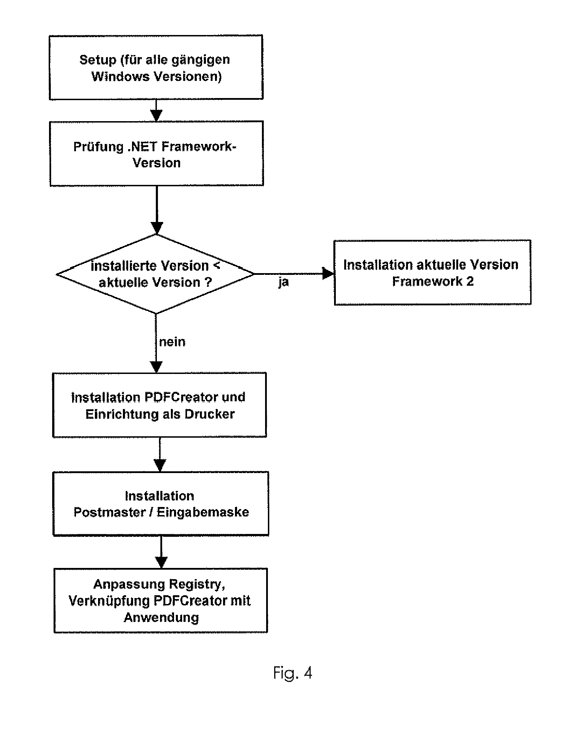

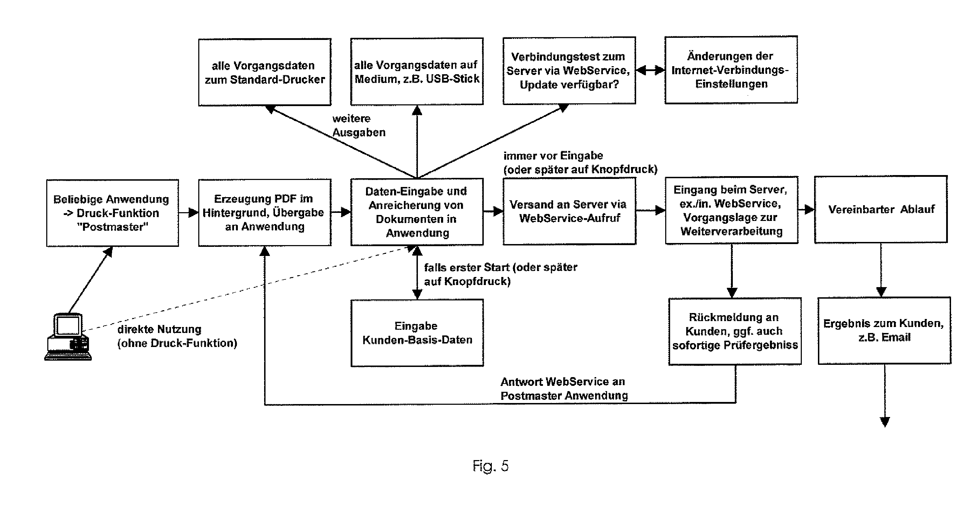

Die Figuren 4 und 5 zeigen, im Zusammenhang mit einem dritten Ausführungsbeispiel, einen Ablaufplan der Verfahrensschritte einer Installation des Postmasters und ein Ablauf- und Betriebsdiagramm des Postmasters.

Der Postmaster besteht im Wesentlichen aus folgenden, voneinander abhängigen Teilen:
1.) Automatische Setup- Routine für alle gängigen Windows- Betriebssysteme (Windows 2000, 2003, XP usw., jetzt auch Windows- Vista).
2.) NET Framework 2 (Voraussetzung für die Postmaster Anwendung, die mit .NET entwickelt wurde). Die automatische Setup- Funktion stellt fest, ob das Microsoft-Framework >= 2 installiert ist, wenn nein, dann wird dieses automatisch nachinstalliert (enthalten im gepackten SetupProgramm).
3.) PDFCreator-virtueller Druckertreiber (virtueller Drucker, der nach Anwahl der "Windows-Druck-Funktion" ein PDF des zu druckenden Dokumentes erzeugt und an die Postmaster Maske bzw. Client- Anwendung zur Anreicherung von weiteren Daten und Dokumenten weiter reicht). Das Setup installiert den virtuellen und kommerziell frei nutzbaren PDFCreator Druckertreiber (basierend auf Ghostscript), dabei werden alle relevanten Werte wie Installations- Pfade, Druckernamen "Postmaster" usw. automatisch gesetzt. Es passt die Registry- Daten für den PDFCreator an (für alle Benutzer des Windows-Systems), damit der PDFCreator seine erzeugten PDF Dokumente automatisch abspeichert und im Anschluss die Postmaster Maske bzw. Client- Anwendung aufruft, mit Übergabe der jeweiligen PDF- Datei. Der neue Drucker wird in der Windows- Druckerliste eingetragen und steht ab sofort allen Windows- Anwendungen mit Druckfunktion zur Verfügung.
4.) Eigentliche Postmaster Maske bzw. Client- Anwendung auf Client- Seite (Datenübernahme, Anreicherung und Eingabe beim Kunden, Speichern von kompletten Vorgängen auf beliebigen Medien wie z.B. USB Sticks und neben Versand- Funktion auch Komplettdruck aller Daten).
   Wird über den in der Druckerliste vorhandenen Eintrag "Postmaster" aus einer beliebigen Anwendung heraus gedruckt, dann startet die Postmaster Maske bzw. Client-Anwendung und übernimmt die erzeugte PDF Datei vom PDFCreator entgegen (alles geschieht im Hintergrund, nur der Start der Maske mit dem zur Ansicht übernommenen PDF ist zu sehen). Das erzeugte PDF ist normalerweise "textbasiert", das heißt auf Textinhalte kann ohne Texterkennung (OCR) zugegriffen werden (Bilder bleiben als Bilder im PDF erhalten) - daher sind einfache Regelprüfungen auf Text- Basis unmittelbar möglich (automatisierter und beschleunigter Prozess mit sofortiger Rückantwort des "Prüfergebnisses").
   Beim ersten Start erwartet die Anwendung die Eingabe der "Client- Basis- Daten". Daten, die eine Zuordnung zum Client möglich machen und auch einen automatischen Rückversand der gesammelten Vorgangsdaten zum Client per Email ermöglichen - zum Zwecke der gesammelten Ablage und als zusätzliche Empfangsbestätigung.
   Das Programm testet zunächst die Verbindung zum Webservice Server und überprüft auch, ob eine neue Version der Client- Anwendung (Postmaster) verfügbar ist und herunter geladen werden kann, bzw. ob mit der veralteten Anwendung dennoch gesendet werden kann (späteres Update, da noch kompatibel). Das Programm ermöglicht zahlreiche Internet- Verbindungseinstellungen, wie z.B. direkte Verbindung (z.B. Werkstätten mit einzelnen DSL- Verbindungen), via Proxy/Firewall (z.B. Kunden mit zentralem Internet- Server und vielen, angeschlossenen Nutzern) usw., so dass es überall einsetzbar wird.
   Das Programm ermöglicht die Ansicht des erzeugten PDFs und die Eingabe von weiteren strukturierten (Vorgangs-) Daten, außerdem das einfache Hinzufügen von weiteren Dokumenten wie z.B. Bildern und/oder Texten (alle markieren und mit nur "einem Klick" hinzufügen).
   Ist alles vollständig, erzeugt das Programm einen XML- File mit allen gesammelten Daten (sämtliche Dokumente/Bilder werden im Base64- Format in das XML-Dokument eingefügt), der via Webservice- Aufruf über eine normale (oder auch "Https- verschlüsselte") Internetverbindung an den Webservice-Server 50 versendet wird.
   Es ist ebenfalls möglich, alle in einem Vorgang gesammelten Daten auf einem beliebigen Medium (z.B. Festplatte, USB- Stick) zu speichern und neben dem Direkt-Versand auch komplett über einen angeschlossenen Drucker ausdrucken.
   Das Programm zeigt das Ergebnis der Verschickung sofort an (Rückantwort des aufgerufenen WebServices), je nach weiter folgendem Prozess können auch direkt Berichte und automatisch erzeugte Prüfergebnisse zurückgeliefert werden - so besteht absolute Sicherheit, dass alle Daten wirklich angekommen sind.
   Die Client- Anwendung kann auch direkt gestartet werden (nicht nur über die Druck-Funktion). Sollen z.B. "unvollständige Vorgänge" (die bereits verschickt wurden) durch weitere Daten/Dokumente vervollständigt werden, so können diese auch ohne Druckfunktion direkt über die Anwendung verschickt werden, ein Verweis auf den "alten, unvollständigen" Vorgang ist möglich
5.) Webservice auf einem externen Webserver (zentrale Annahme der Client- Daten aus der Postmaster-Anwendung und Weiterreichung zu den internen Webservern zur eigentlichen Verarbeitung und Vorgangsanlage).
   Der externe Webservice nimmt die XML- Datei mit allen Daten aus der Client Anwendung entgegen und reicht Sie an unseren internen WebServer/WebService ("Mimik aus Sicherheitsgründen") zur eigentlichen Vorgangsanlage und Rückbestätigung weiter.
6.) Webservice-Server verteilt auf mehrere redundante (Ausfallsicherheit), interne Webserver (Annahme der Client- Daten und Grundanlage des Vorgangs mit allen Dokumenten und strukturierten Daten, außerdem automatische Versionierung und Update- Funktion der Postmaster- Client Anwendung beim Kunden/Nutzer).

Der interne WebService-Server wertet die eingegangene XML- Datei aus, extrahiert alle Daten und Dokumente, liefert eine Rückantwort an den "Kunden" (zurück via externem WebService und dann direkt an die Client Anwendung) und legt einen Vorgang an, der im "normalen" Ablauf abgearbeitet wird.

Außerdem findet hier die Versionsprüfung der Client- Anwendung statt, so dass ein automatisches Update oder der Hinweis darauf beim Nutzer angestoßen werden kann.

Der Schwerpunkt der Anwendung Postmaster besteht im Ergebnis aus der Datenübertragung zum Webservice-Server 50 via Internet 40 (gesichert und ungesichert - wahlweise) und nur sekundär auf Speicherung auf Stick oder Datenträger (z.B. beim Client).

In der Figur 3 ist ersichtlich, dass auch weitere Dokumente, beliebige Bilder usw. mit übertragen und in die Eingabemaske geladen werden können. Das einfache Anreichern von beliebigen, vom Druck unabhängigen, bereits gespeicherten Dokumenten zum Vorgang (zum PDF und den Eingabedaten) ist eine wichtige Funktion. Gesammelt werden alle Dokumente und Eingaben in einem XML-Dokument. Die Rückübermittlung (Antwort) kann als Zusammenfassung von zwei unabhängigen Strängen aufgefasst werden. Die unmittelbare Antwort des Webservices und die direkte Anzeige eines Ergebnisses, so wie eine zusätzlich mögliche Antwort via Email, aller gesammelten Daten. Natürlich sind auch weitere (spätere) Rückantworten über andere Wege möglich, wie z.B. das "Umrouten" von Vorgängen in andere Systeme, beispielsweise das Netz der GDV (Gesamtverband der Versicherungswirtschaft).

Die direkte Antwort des Webservices an die Postmaster- Client Anwendung ist eine Website, die dynamisch erzeugt sein kann, inklusive Links und Ablage von z.B. Prüfberichten oder Ähnlichem.

Der Postmaster kann sich automatisch updaten, beispielsweise über eine dynamisch erzeugte und als Antwort von Postmaster generierte Website mit allen Infos dazu, gegebenenfalls in Abhängigkeit einer "Client- ID" (das heißt, es wird "clientspezifisch" upgedatet).

Wahlweise kann auf unverschlüsselte oder 128 Bit verschlüsselte SSL Datenübertragung umgeschaltet werden, alle Inhalte, Eingaben, Dokumente werden bei der zuletzt genannten Einstellung entsprechend verschlüsselt. Die Einstellung steht nach der Einrichtung für alle Übermittlungen automatisch zur Verfügung (wie ja bei allen anderen Einstellungen auch). Des Weiteren ist die Vorgangsanlage nun redundant angebunden, d.h. bei Ausfall eines Servers wird auf einen anderen Server ausgewichen und über diesen die Anlage versucht. Normalerweise empfängt ein WebService auf dem externen Webserver den Vorgang, leitet diesen weiter an einen internen WebService (nur hier ist der Zugriff zum Speichern der Daten ins Archiv möglich) und dort geschieht die eigentliche Vorgangsanlage. Ist nun ein interner Webserver/Service ausgefallen, wird ein anderer interner Server angesprochen und dieser versucht über einen gleichwertig installierten WebService die Vorgangsanlage.

Der letzte redundante Webserver/Service in der Liste aller redundanten Webserver liegt auf dem externen Webserver selbst (also nicht, wie üblich, rein intern). Bei einem Stromausfall (falls der externe Webserver ebenfalls ausfällt) speichert der Postmaster nun alle Daten auf den externen Webserver selbst. Die Daten können dann von intern jederzeit abgeholt werden - wenn wieder Strom vorhanden ist (oder generell die internen Server wieder verfügbar sind).

Dass Vorgänge auf dem externen Webserver zur Abholung bereit liegen, wird durch eine eingerichtete Verzeichnisüberwachung angezeigt - in dem Moment, in dem intern alles wieder läuft und Emails empfangen werden können, erfolgt ein kontinuierlicher Email- Eingang mit der Anzeige dieser "außerhalb" liegenden und zum Übernehmen bereit stehenden Vorgänge.

### Bezugszeichenliste

- 10: erste Applikation
- 20: zweite Applikation
- 30: Kommunikationseinrichtung, Webservice Client
- 31: Postmaster
- 40: Übertragungsmedium, Internet
- 50: Server-Applikation, Webservice Server

## Patentansprüche

1. Verfahren zum Vorbereiten oder Durchführen eines Zugriffs, insbesondere einer Datenübertragung, von einer auf einer Client-Datenverarbeitungseinrichtung ausführbaren oder ausgeführten ersten Applikation (10) auf ein mit der Client-Datenverarbeitungseinrichtung gekoppeltes Übertragungsmedium (40) mit den Schritten:
- Bereitstellen einer zweiten Applikation (20), welche mindestens eine Schnittstelle aufweist, zum Wandeln des Formats von Informationen, welche von der ersten Applikation (10) übermittelt werden, auf ein durch die zweite Applikation (20) vorgegebenes Standard-Format;
- Anmelden oder Installieren dieser zweiten Applikation (20) bei oder auf der Client-Datenverarbeitungseinrichtung zum Übertragen oder Ermöglichen der Übertragung der Informationen der ersten Applikation (10) im Standard-Format zwischen der zweiten Applikation (20) und dem Übertragungsmedium (40).

2. Verfahren nach dem vorhergehenden Anspruch, wobei folgende Schritte zum Wandeln des Formats ausgeführt werden:
- Wandeln des Formats von Informationen, welche von der ersten Applikation (10) übermittelt werden, in ein Zwischenformat; und
- Wandeln der nach dem vorherigen Schritt erhaltenen Informationen vom Zwischenformat in das Standard-Format.

3. Verfahren nach einem der vorhergehenden Ansprüche, wobei die zweite Applikation (20) eine Auswahlmaske zum Eingeben von Informationen insbesondere in vordefinierte Eingabefelder bereitstellt, die nach dem Eingeben in das Standard-Format gewandelt und an das Übertragungsmedium (40) übertragen werden.

4. Verfahren nach einem der vorhergehenden Ansprüche, wobei die zweite Applikation (20) eine Mehrzahl von Client-Schnittstellen für eine Mehrzahl von ersten Applikationen (10) und mindestens eine Standard-Schnittstelle für mindestens ein Standard-Format umfasst, wobei Informationen zwischen einer ersten Applikation (10) und der zweiten Applikation (20) über die der ersten Applikation (10) zugeordnete Client-Schnittstelle übertragen werden, und zwischen der zweiten Applikation (20) und dem Übertragungsmedium (40) über die mindestens eine dem Standard-Format zugeordnete Standard-Schnittstelle.

5. Verfahren nach einem der vorhergehenden Ansprüche, wobei eine mit der Standard-Schnittstelle der zweiten Applikation (20) und mit dem Übertragungsmedium (40) gekoppelte Kommunikationseinrichtung (30), umfassend beispielsweise einen Datensender und/oder einen Datenempfänger, die Informationen im Standard-Format zwischen der zweiten Applikation (20) und dem Übertragungsmedium (40) überträgt.

6. Verfahren nach einem der vorhergehenden Ansprüche, wobei die zweite Applikation (20) ein Treiber zur Umsetzung einer uni- oder bidirektionalen Kommunikation zwischen der ersten Applikation (10) und dem Übertragungsmedium (40) und/oder der Kommunikationseinrichtung (30) ist.

7. Verfahren nach einem der vorhergehenden Ansprüche, wobei eine zum Empfangen oder Verwalten von Informationen im Standard-Format ausgebildete Server-Applikation (50) auf einer mit dem Übertragungsmedium (40) gekoppelten Server-Datenverarbeitungseinrichtung die von einer sendenden ersten Applikation (10) mittels der zweiten Applikation (20) in das Standard-Format umgesetzten und von der Kommunikationseinrichtung (30) übertragenen Informationen im Standard-Format empfängt.

8. Verfahren nach einem der vorhergehenden Ansprüche, wobei die von der Kommunikationseinrichtung (30) an die Server-Applikation (50) übertragenen Informationen im Standard-Format durch einen Parser der Server-Applikation (50) zur automatisierten Weiterverarbeitung durch die Server-Applikation (50) in ein für die Weiterverarbeitung vorbestimmtes oder geeignetes Format übertragen werden.

9. Verfahren nach einem der vorhergehenden Ansprüche, wobei die auf der Client- Datenverarbeitungseinrichtung installierte zweite Applikation (20) zu festlegbaren Zeitpunkten, vorzugsweise in regelmäßigen Zeitabständen, prüft, ob eine Version der auf der Client- Datenverarbeitungseinrichtung installierten zweiten Applikation (20) eine aktuelle Version der zweiten Applikation (20) ist und wobei, falls dies nicht der Fall ist, die auf der Client- Datenverarbeitungseinrichtung installierte zweite Applikation (20) aktualisiert wird.

10. Verfahren nach einem der vorhergehenden Ansprüche, wobei die Server-Applikation (50) nach dem Empfangen der von der Kommunikationseinrichtung (30), welche auf der Client-Datenverarbeitungseinrichtung in Betrieb ist, übertragenen Informationen im Standard-Format, eine Empfangsbestätigung an die Kommunikationseinrichtung (30) sendet.

11. Computerprogramm, welches dazu ausgelegt ist, wenn es auf einer Datenverarbeitungseinrichtung geladen oder ausgeführt wird, das Verfahren nach einem der vorhergehenden Ansprüche auszuführen.

12. Datenspeichereinheit oder Computerprogrammprodukt umfassend das Computerprogramm nach dem vorhergehenden Anspruch.

13. System zum Vorbereiten oder Durchführen eines Zugriffs, insbesondere einer Datenübertragung von einer auf einer Client-Datenverarbeitungseinrichtung ausführbaren oder ausgeführten ersten Applikation (10) auf ein mit der Client-Datenverarbeitungseinrichtung gekoppeltes Übertragungsmedium (40), wobei
- eine zweite Applikation (20) bereitgestellt oder vorgegeben ist, welche mindestens eine Schnittstelle aufweist zum Wandeln des Formats von Informationen, welche von der ersten Applikation (10) übermittelt werden, in ein durch die zweite Applikation (20) vorgegebenes Standard-Format, und
- diese zweite Applikation (20) bei oder auf der Client-Datenverarbeitungseinrichtung zum Übertragen oder Ermöglichen der Übertragung der Informationen der ersten Applikation (10) im Standard-Format zwischen der zweiten Applikation (20) und dem Übertragungsmedium (40) angemeldet oder installiert werden kann.

## Geänderte Patentansprüche

### Geänderte Patentansprüche gemäss Regel 137(2) EPÜ.

**1.** Verfahren zum Vorbereiten oder Durchführen eines Zugriffs, insbesondere einer Datenübertragung, von einer auf einer Client-Datenverarbeitungseinrichtung ausführbaren oder ausgeführten ersten Applikation (10) auf ein mit der Client-Datenverarbeitungseinrichtung gekoppeltes Übertragungsmedium (40) mit den Schritten:
- Bereitstellen einer zweiten Applikation (20), welche mindestens eine Schnittstelle aufweist, zum Wandeln des Formats von Informationen, welche von der ersten Applikation (10) übermittelt werden, auf ein durch die zweite Applikation (20) vorgegebenes Standard-Format;
- Anmelden oder Installieren dieser zweiten Applikation (20) bei oder auf der Client-Datenverarbeitungseinrichtung zum Übertragen oder Ermöglichen der Übertragung der Informationen der ersten Applikation (10) im Standard-Format zwischen der zweiten Applikation (20) und dem Übertragungsmedium (40), wobei zum Wandeln des Formats folgende Schritte ausgeführt werden:
- Wandeln des Formats von Informationen, welche von der ersten Applikation (10) übermittelt werden, in ein Zwischenformat; und
- Wandeln der nach dem vorherigen Schritt erhaltenen Informationen vom Zwischenformat in das Standard-Format.

**2.** Verfahren nach einem der vorhergehenden Ansprüche, wobei die zweite Applikation (20) eine Auswahlmaske zum Eingeben von Informationen insbesondere in vordefinierte Eingabefelder bereitstellt, die nach dem Eingeben in das Standard-Format gewandelt und an das Übertragungsmedium (40) übertragen werden.

**3.** Verfahren nach einem der vorhergehenden Ansprüche, wobei die zweite Applikation (20) eine Mehrzahl von Client-Schnittstellen für eine Mehrzahl von ersten Applikationen (10) und mindestens eine Standard-Schnittstelle für mindestens ein Standard-Format umfasst, wobei Informationen zwischen einer ersten Applikation (10) und der zweiten Applikation (20) über die der ersten Applikation (10) zugeordnete Client-Schnittstelle übertragen werden, und zwischen der zweiten Applikation (20) und dem Übertragungsmedium (40) über die mindestens eine dem Standard-Format zugeordnete Standard-Schnittstelle.

**4.** Verfahren nach einem der vorhergehenden Ansprüche, wobei eine mit der Standard-Schnittstelle der zweiten Applikation (20) und mit dem Übertragungsmedium (40) gekoppelte Kommunikationseinrichtung (30), umfassend beispielsweise einen Datensender und/oder einen Datenempfänger, die Informationen im Standard-Format zwischen der zweiten Applikation (20) und dem Übertragungsmedium (40) überträgt.

**5.** Verfahren nach einem der vorhergehenden Ansprüche, wobei die zweite Applikation (20) ein Treiber zur Umsetzung einer uni- oder bidirektionalen Kommunikation zwischen der ersten Applikation (10) und dem Übertragungsmedium (40) und/oder der Kommunikationseinrichtung (30) ist.

**6.** Verfahren nach einem der vorhergehenden Ansprüche, wobei eine zum Empfangen oder Verwalten von Informationen im Standard-Format ausgebildete Server-Applikation (50) auf einer mit dem Übertragungsmedium (40) gekoppelten Server-Datenverarbeitungseinrichtung die von einer sendenden ersten Applikation (10) mittels der zweiten Applikation (20) in das Standard-Format umgesetzten und von der Kommunikationseinrichtung (30) übertragenen Informationen im Standard-Format empfängt.

**7.** Verfahren nach einem der vorhergehenden Ansprüche, wobei die von der Kommunikationseinrichtung (30) an die Server-Applikation (50) übertragenen Informationen im Standard-Format durch einen Parser der Server-Applikation (50) zur automatisierten Weiterverarbeitung durch die Server-Applikation (50) in ein für die Weiterverarbeitung vorbestimmtes oder geeignetes Format übertragen werden.

**8.** Verfahren nach einem der vorhergehenden Ansprüche, wobei die auf der Client-Datenverarbeitungseinrichtung installierte zweite Applikation (20) zu festlegbaren Zeitpunkten, vorzugsweise in regelmäßigen Zeitabständen, prüft, ob eine Version der auf der Client- Datenverarbeitungseinrichtung installierten zweiten Applikation (20) eine aktuelle Version der zweiten Applikation (20) ist und wobei, falls dies nicht der Fall ist, die auf der Client- Datenverarbeitungseinrichtung installierte zweite Applikation (20) aktualisiert wird.

**9.** Verfahren nach einem der vorhergehenden Ansprüche, wobei die Server-Applikation (50) nach dem Empfangen der von der Kommunikationseinrichtung (30), welche auf der Client-Datenverarbeitungseinrichtung in Betrieb ist, übertragenen Informationen im Standard-Format, eine Empfangsbestätigung an die Kommunikationseinrichtung (30) sendet.

**10.** Computerprogramm, welches dazu ausgelegt ist, wenn es auf einer Datenverarbeitungseinrichtung geladen oder ausgeführt wird, das Verfahren nach einem der vorhergehenden Ansprüche auszuführen.

**11.** Datenspeichereinheit oder Computerprogrammprodukt umfassend das Computerprogramm nach dem vorhergehenden Anspruch.

**12.** System zum Vorbereiten oder Durchführen eines Zugriffs, insbesondere einer Datenübertragung von einer auf einer Client-Datenverarbeitungseinrichtung ausführbaren oder ausgeführten ersten Applikation (10) auf ein mit der Client-Datenverarbeitungseinrichtung gekoppeltes Übertragungsmedium (40), wobei
- eine zweite Applikation (20) bereitgestellt oder vorgegeben ist, welche mindestens eine Schnittstelle aufweist zum Wandeln des Formats von Informationen, welche von der ersten Applikation (10) übermittelt werden, in ein durch die zweite Applikation (20) vorgegebenes Standard-Format, und
- diese zweite Applikation (20) bei oder auf der Client-Datenverarbeitungseinrichtung zum Übertragen oder Ermöglichen der Übertragung der Informationen der ersten Applikation (10) im Standard-Format zwischen der zweiten Applikation (20) und dem Übertragungsmedium (40) angemeldet oder installiert werden kann, wobei zum Wandeln des Formats die von der ersten Applikation (10) übermittelten Informationen von der zweiten Applikation (20) in ein Zwischenformat und die daraus erhaltenen Informationen vom Zwischenformat in das Standard-Format gewandelt werden können.
